# EUROPÄISCHE PATENTSCHRIFT

(11) **EP 1 346 189 B1**
(45) Veröffentlichungstag und Bekanntmachung des Hinweises auf die Patenterteilung: **09.03.2005**
(21) Anmeldenummer: 01990305.3
(22) Anmeldetag: 18.12.2001
(51) Int. Cl.: G01B 5/02

(54) **LÄNGENMESSVORRICHTUNG**
DEVICE FOR MEASURING LENGTH
DISPOSITIF DE MESURE DE LONGUEUR

(30) Priorität: 22.12.2000 DE 10064734; 04.07.2001 DE 20110905 U
(43) Veröffentlichungstag der Anmeldung: 24.09.2003
(73) Patentinhaber: Dr. Johannes Heidenhain GmbH, 83301 Traunreut (DE)
(72) Erfinder: WAHL Claudia, D-74189 Weinsberg (DE); GOLOWIN Andrea, D-74189 Weinsberg (DE); BAUER Rosemarie, D-71732 Tamm (DE)
(86) Internationale Anmeldenummer: PCT/DE2001/004777
(87) Internationale Veröffentlichungsnummer: WO 2002/052220

(56) Entgegenhaltungen:
- DE-A- 2 505 587
- DE-A- 3 432 511
- DE-A- 4 241 712
- US-A- 5 164 576
- US-A- 5 979 238
- US-A- 6 049 992
- US-A- 6 105 271
- US-B1- 6 251 073
- PATENT ABSTRACTS OF JAPAN vol. 1998, no. 07, 31. März 1998 (1998-03-31) & JP 07 139935 A (DR JOHANNES HEIDENHAIN GMBH), 2. Juni 1995 (1995-06-02)

## Beschreibung

### TECHNISCHES GEBIET

Die vorliegende Erfindung betrifft eine Längenmessvorrichtung mit einem bandförmigen Maßkörper, einem Sensor/Sensoren, der/die entlang dem Maßkörper bewegt wird/werden und dabei die auf dem Maßkörper gespeicherten Informationen erfasst/erfassen, gegebenenfalls auswertet/auswerten und weiterleitet/weiterleiten.

Derartige Längenmesssysteme werden in vielen Bereichen eingesetzt wie beispielsweise bei Messmaschinen, Werkzeugmaschinen, Metallbearbeitungsmaschinen, Laseranlagen, Positionieranlagen, Holzbearbeitungsmaschinen, Bestückungsautomaten, Handlingsanlagen, Schweißanlagen, Erodieranlagen, Pressen, Hebebühnen, Aufzüge und so weiter.

Des Weiteren finden derartige Längenmessvorrichtungen Einsatzbereiche zur Positionsbestimmung an Linearachsen, Linearmotoren und Verfahreinheiten.

Dabei wird in vielen Bereichen eine besonders hohe Messgenauigkeit gefordert, die bis in den Nanometer-Bereich geht.

Probleme bei der Messdatenerfassung können beispielsweise durch Späne, Sprühnebel von Kühlmitteln, Lösungsmittel, allgemeine Öle, Fette, Wasser und mechanischen Verschleiß verursacht werden.

### STAND DER TECHNIK

Es sind Längenmessvorrichtungen der eingangs genannten Art bekannt, die in dem Katalog "Magnetisches Längenmesssystem MS01 - Technisches Handbuch" der Anmelderin dokumentiert sind. Das dabei eingesetzte Messsystem besteht aus einem Maßkörper, einem Anschlusskabel und einem Auswertsystem, das sich aus Sensorkopf und Auswertelektronik zusammensetzt. Der Sensorkopf erfasst die Position, während er über den Maßkörper bewegt wird. Der Sensor nimmt dabei Informationen von magnetischen Feldern wahr und gibt diese Signale an die Auswertelektronik weiter. Die Auswertelektronik verarbeitet diese Signale zu schnittstellengerechten Protokollen zur genauen Positionsbestimmung.

Bei den bekannten Längenmessvorrichtungen besteht ein Problem darin, dass sie im Reparaturfall nicht ausgetauscht werden können, wenn sie unlösbar in dem jeweils vorhandenen Bauteil oder der Maschine integriert sind. Um die Maßkörper vor Spänen, Sprühnebeln von Kühlmitteln, Lösungsmitteln, allgemeinen Ölen, Fetten, Wasser und mechanischem Verschleiß zu schützen, werden sie in geschlossene Räume integriert, die nicht zerstörungsfrei zur Demontage beziehungsweise Remontage geöffnet werden können, das heißt die den Raum umgebenden Teile, insbesondere entlang der Messachse, sind bei den bekannten Längenmessvorrichtungen nicht wieder vollständig beziehungsweise ohne Nacharbeit einsetzbar.

### DARSTELLUNG DER ERFINDUNG

Ausgehend von dem genannten Stand der Technik liegt der vorliegenden Erfindung die Aufgabe beziehungsweise das technische Problem zugrunde, eine Längenmessvorrichtung der eingangs genannten Art anzugeben, die die Vorteile hinsichtlich Genauigkeit, Zuverlässigkeit und Schutz der bekannten Längenmessvorrichtungen gewährleistet und gleichzeitig eine äußerst wirtschaftliche Reparatur beziehungsweise Ersatz in vorhandenen Bauteilen ermöglicht.

Die erfindungsgemäße Längenmessvorrichtung ist durch die Merkmale des unabhängigen Anspruchs 1 gegeben. Vorteilhafte Ausgestaltungen und Weiterbildungen sind Gegenstand der abhängigen Ansprüche.

Die erfindungsgemäße Längenmessvorrichtung ist demgemäß durch folgende Merkmale gekennzeichnet: der Maßkörper ist in einem geschlossenen, lediglich an zumindest einer Stirnseite offenen oder öffenbaren Kanal angeordnet und es sind Fixiermittel innerhalb des Kanals vorhanden, die den Maßkörper innerhalb des Kanals lösbar fixieren, derart, dass der Maßkörper im Bedarfsfall durch Abziehen beziehungsweise Einführen von der Stirnseite des Kanals ausgetauscht werden kann.

Dabei kommt bevorzugt eine Ausführungsvariante zum Einsatz, die sich dadurch auszeichnet, dass die Fixiermittel den Maßkörper durch elastisch aufgebrachten Druck fixieren.

Hinsichtlich der konstruktiv vorhandenen Gegebenheiten im industriellen Bereich zeichnet sich eine besonders vorteilhafte Weiterbildung dadurch aus, dass die Fixiermittel den Maßkörper gegen den dem Sensor/den Sensoren zugewandten Innenbereich des Kanals drücken.

Erfindungsgemäß ist erkannt worden, dass durch die lösbare fixierbare Anordnung des Maßkörpers innerhalb eines geschlossenen Systems problemlos ein jederzeitiger Austausch des Maßkörpers möglich ist, ohne dass Führungsschienen, Maschinenbetten oder sonstige speziell für den Maßkörper gefertigte Bauteile in ihrer Gesamtheit ausgetauscht oder mechanisch bearbeitet werden müssen. Gleichzeitig wird durch das Vorhandensein des Maßkörpers in einem geschlossenen Kanal der Maßkörper vor den im industriellen Bereich auftretenden hohen Beanspruchungen oder Einflüssen, die zu Messfehlern führen können, wie beispielsweise Späne, Sprühnebel von Kühlmitteln, Lösungsmittel, allgemeine Öle, Fette, Wasser oder mechanischer Verschleiß zuverlässig geschützt.

Eine bevorzugte alternative Ausgestaltung zeichnet sich dadurch aus, dass die Fixiermittel als verschlossener Bandkörper oder als Bandkörper mit elastischem Hohlprofilquerschnitt, insbesondere mit einer Ventileinheit, ausgebildet sind, wobei die Querschnittsabmessungen des Bandkörpers durch Veränderung des Volumens innerhalb des Bandkörpers beziehungsweise des Profilquerschnitts durch Zubeziehungsweise Abführung eines flüssigen oder gasförmigen Mediums veränderbar sind. Der Bandkörper ist bevorzugt als Porenbandkörper ausgebildet.

Eine weitere besonders vorteilhafte Alternative ist dadurch gekennzeichnet, dass die Fixiermittel als elastische Bandkörper ausgebildet sind, deren Querschnittsabmessungen durch Veränderungen auf den elastischen Bandkörper einwirkenden Zugkraft verändert werden können, wobei der elastische Bandkörper insbesondere als Gummiband oder als Wellenband ausgebildet sein kann. Bei der Ausbildung als Wellenband verhält es sich so, dass im eingesetzten Zustand dem Wellenband jeweils am Hochpunkt des Wellentales beziehungsweise Wellentiefes ein Abstützpunkt innerhalb des geschlossenen Kanals gegeben wird, der eine zuverlässige Fixierung des Maßkörpers ermöglicht.

Hinsichtlich einer besonders wirtschaftlichen Herstellung und den geforderten Genauigkeiten gerecht werdende Ausführungsform zeichnet sich dadurch aus, dass der geschlossene Kanal durch eine in einem Bauteil vorhandene Nut und ein die Nut abdeckendes Deckband ausgebildet ist, wobei gemäß einer besonders bevorzugten Ausführungsgestaltung das Deckband, das bevorzugt als Deckblech ausgebildet ist, angeschweißt oder aufgeklebt ist. Diese Variante bietet besondere Vorteile hinsichtlich der geforderten Genauigkeit, da das Deckband auf der geschliffenen Fläche eines Bauteils angeordnet werden kann, wodurch die exakte geometrische Positionierung des Deckbandes und dadurch auch des hinter dem Deckband angeordneten Maßkörpers in Verbindung mit den Fixierungsmitteln gewährleistet werden kann.

Der Maßkörper kann als flexibles Maßkörperband oder als starres Maßkörperband ausgebildet sein.

Eine besonders bevorzugte Ausgestaltung, die eine sehr hohe Genauigkeit bei der Längenmessung gewährleistet, zeichnet sich dadurch aus, dass die Längenmessvorrichtung als magnetische Messvorrichtung ausgebildet ist, das heißt der Sensor/die Sensoren erfasst/erfassen die auf dem bandförmigen Maßkörper vorhandenen unterschiedlichen magnetischen Feldstärken und gibt/geben seine/ihre Signale an die Auswerteinheit ab.

Eine besonders bevorzugte Ausgestaltung, die eine sehr hohe Genauigkeit bei der Längenmessung gewährleistet, zeichnet sich dadurch aus, dass die Längenmessvorrichtung als induktive Messvorrichtung ausgebildet ist, das heißt der Sensor/die Sensoren erfasst/erfassen die auf dem bandförmigen Maßkörper vorhandenen unterschiedlichen Permeabilitätswerte und gibt/geben seine/ihre Signale an die Auswerteinheit ab.

Eine alternative Ausgestaltung zeichnet sich dadurch aus, dass die dem Arbeitsbereich, das heißt dem Sensor/den Sensoren zugeordnete Wandung des Kanals ist als elastisch konkav in den Kanal nach innen gewölbt gerichtete Wandung ausgebildet und der Maßkörper drückt im in den Kanal eingeführten Zustand den konvexen Wandungsbereich nach außen und wird dadurch klemmend gehalten.

Eine besonders bevorzugte Ausgestaltung zeichnet sich dadurch aus, dass die Fixiermittel als Einzelelemente ausgebildet sind, die von der Rückseite des Kanals durch eine in einer Ausnehmung des den Kanal umgebenden Bauteils eingebracht und fixiert sind, wobei die Fixiermittel bevorzugt als Schrauben ausgebildet sind.

Die erfindungsgemäße Längenmessvorrichtung kann bevorzugt in einem Führungsprofil, in einem Maschinenbett oder in sonstigen speziell für den Maßkörper gefertigten Bauteilen angeordnet sein.

Erfindungsgemäß ist erkannt worden, dass durch die Austauschbarkeit des Maßkörpers innerhalb eines geschlossenen Kanals der wirtschaftliche Einsatz derartiger Längenmessvorrichtungen bedeutend erhöht werden kann. Im Falle einer erforderlichen Reparatur beziehungsweise eines erforderlichen Austausches des Maßkörpers kann dieser aufgrund der Lösbarkeit der vorhandenen Fixiermittel aus dem geschlossenen Kanal gezogen werden und durch einen neuen Maßkörper ersetzt werden, ohne dass das gesamte Führungsprofil, das gesamte Maschinenbett oder das sonstige speziell für den Maßkörper gefertigte Bauteil überarbeitet oder ausgetauscht werden muss. Gleichzeitig ist der Maßkörper in einem geschlossenen Kanal vorhanden und damit vor rauen Umwelteinflüssen geschützt.

Eine alternative Ausgestaltung der erfindungsgemäßen Längenmessvorrichtung, die unabhängig von den oben genannten Ausführungsformen zu sehen ist, zeichnet sich dadurch aus, dass der Maßkörper in einem geschlossenen, lediglich an zumindest einer Stirnseite offenen oder öffenbaren Kanal angeordnet ist und der Maßkörper vorgespannt innerhalb des Kanals vorhanden ist. Dabei wird so vorgegangen, dass der Maßkörper zunächst in den Kanal eingebracht wird, unter Zugspannung gesetzt wird und in diesem Zustand lösbar innerhalb des Kanals fixiert wird. Dies geschieht vorteilhaft durch an den Stirnseiten des Kanals vorhandene Fixiereinheiten.

Eine besonders bevorzugte Ausgestaltung einer Längenmessvorrichtung, die eine dauerhaft zuverlässige Fixierung des Maßkörpers und einen äußerst einfachen Austauschvorgang desselben gewährleistet, zeichnet sich dadurch aus, dass die Fixiermittel als zumindest ein elastischer Schlauch, insbesondere als zumindest zwei elastische Schläuche, ausgebildet ist/sind. Dabei zeichnet sich eine vorteilhafte Ausgestaltung weiterhin dadurch aus, dass der Innenhohlraum der Fixiermittel evakuierbar ausgebildet ist, wobei zum Austauschen des Maßkörpers der Schlauch/die Schläuche evakuiert wird/werden, sodass der Maßkörper lose in dem Kanal vorhanden ist und in einfacher Art und Weise abgezogen werden kann und daran anschließend ein neuer Maßkörper eingeschoben werden kann. Anschließend wird der Schlauch/werden die Schläuche wieder unter Umgebungsdruck gesetzt, wodurch sich diese aufweiten und den eingesetzten Maßkörper in seiner Lage fixieren. Es ist auch denkbar, den Schlauch/die Schläuche unter Überdruck zu setzen.

Eine vorteilhafte Weiterbildung, die fertigungstechnische Vorteile mit sich bringt, zeichnet sich dadurch, dass mehrere hintereinander angeordnete Führungsprofile vorhanden sind, wobei entweder ein durchgehender Maßkörper oder jeweils ein Maßkörper pro Führungsprofil vorhanden sein kann.

Eine besonders bevorzugte Ausgestaltung, die die Erfassung einer Vielzahl von Messwerten problemlos ermöglicht, zeichnet sich dadurch aus, dass am/im Führungsprofil oder am/im Maschinenbett oder an/in speziell gefertigten Bauteilen mehrere Kanäle beziehungsweise Nute mit Maßkörper und Fixiermitteln vorhanden sind, die von entsprechenden Sensoreinheiten abgetastet werden.

Um den Austauschvorgang beziehungsweise Einführvorgang zu erleichtern, ist es vorteilhaft, innerhalb des Kanals beziehungsweise der Nut ein Gleitmittel vorzusehen.

Das Führungsprofil kann auch in Längsrichtung kreisförmig ausgebildet sein, das heißt die Längenmessvorrichtung wird zu Rundmesszwecken eingesetzt.

Um eine dauerhaft zuverlässige Fixierung des eingesetzten Maßkörpers zu gewährleisten, können zusätzliche Fixiermittel vorhanden sein, mittels derer der Maßkörper im Kanal beziehungsweise in der Nut kraft- oder formschlüssig fixiert wird.

Eine besonders vorteilhafte Ausgestaltung, bei der das Führungsprofil durchgehende Ausnehmungen für Befestigungsmittel zum Anschließen des Führungsprofils an die Basis aufweist, zeichnet sich dadurch aus, dass in zumindest einer Ausnehmung eine weitere Informationseinheit, die bevorzugt als Magneteinheit ausgebildet sein kann, angeordnet ist, die von einem Sensor auswertbare Informationen für Referenzpunkte oder Endlagen besitzt.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im Folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: stark schematisierter Querschnitt durch ein Führungsprofil mit aufgesetztem in Längsrichtung bewegbaren Schlitten, dessen Position bestimmt wird unter Einsatz eines Maßkörpers, der innerhalb eines geschlossenen Kanals vorhanden ist und dessen Informationen über einen an dem Schlitten befestigten Sensorkopf detektiert werden,
- Fig. 2: stark schematisierte Darstellung des Grundprinzips einer Längenmessvorrichtung,
- Fig. 3 a, b: schematischer Querschnitt durch einen geschlossenen Kanal mit eingesetzten Fixierungsmitteln im fixierten (Fig. 3a) und unfixierten (Fig. 3b) Zustand, wobei die Fixiermittel als Porenbandkörper ausgebildet sind,
- Fig. 4 a, b: schematische Draufsicht-Schnittdarstellung durch den geschlossenen Kanal gemäß Fig. 3b im nicht fixierten Zustand und gemäß Fig. 3a im fixierten Zustand,
- Fig. 5 a, b: schematische Querschnittsdarstellung einer Draufsicht unter Einsatz eines Gummibandes im Einführungszustand (Fig. 5a) und im fixierten Endzustand (Fig. 5b),
- Fig. 6 a, b: schematische Querschnittsdarstellung einer Draufsicht unter Einsatz eines Wellenbandes im nicht fixierten Zustand (Fig. 6a) und im fixierten Zustand (Fig. 6b),
- Fig. 7 a, b: schematischer Schnitt durch einen Kanal mit konkav nach innen gewölbtem Deckband, das gemäß Fig. 7b den eingeführten Maßkörper fixiert,
- Fig. 8: schematischer Querschnitt durch einen Kanal mit eingesetzten Fixiermitteln, die als Schrauben ausgebildet sind,
- Fig. 9 a, b: schematischer Querschnitt im Kanalbereich mit eingesetzten Fixierungsmitteln im fixierten (Fig. 9a) und unfixierten (Fig. 9b) Zustand, wobei die Fixiermittel als zwei elastische Schläuche ausgebildet sind,
- Fig. 10: schematische Detailperspektive einer zweiten Ausführungsform einer Längenmessvorrichtung mit einem seitlich an einem Schlitten angeordneten Sensor,
- Fig. 11 a, b: schematische Seitenansicht einer Längenmessvorrichtung mit mehreren hintereinander angeordneten Führungsprofilen,
- Fig. 12: schematische Draufsicht auf eine Längenmessvorrichtung mit kreisförmig verlaufenden Führungsprofilen,
- Fig. 13 a, b: schematische Querschnittsdarstellung im Kanalbereich mit eingesetzten Fixierungsmitteln im fixierten (Fig. 13a) und im unfixierten (Fig. 13b) Zustand, wobei die Fixiermittel als metallisches Hohlprofilband mit konvex nach außen gekrümmten Wandeinheiten ausgebildet sind,
- Fig. 14: schematischer Schnitt durch die Profileinheit gemäß Fig. 10 im Bereich einer durchgehenden Ausnehmung, in der eine zusätzliche Informationseinheit angeordnet ist,
- Fig. 15 a, b: schematische Detailperspektive des Austauschvorgangs des Maßkörpers mittels des Einsatzes von Spritzen, wobei als Fixiermittel elastische Schläuche gemäß Fig. 9a, b eingesetzt werden, und
- Fig. 16: schematische Querschnittsdarstellung durch ein Führungsprofil mit zwei Nuten, in denen jeweils ein Maßkörper und ein Fixiermittel angeordnet sind.

### WEGE ZUM AUSFÜHREN DER ERFINDUNG

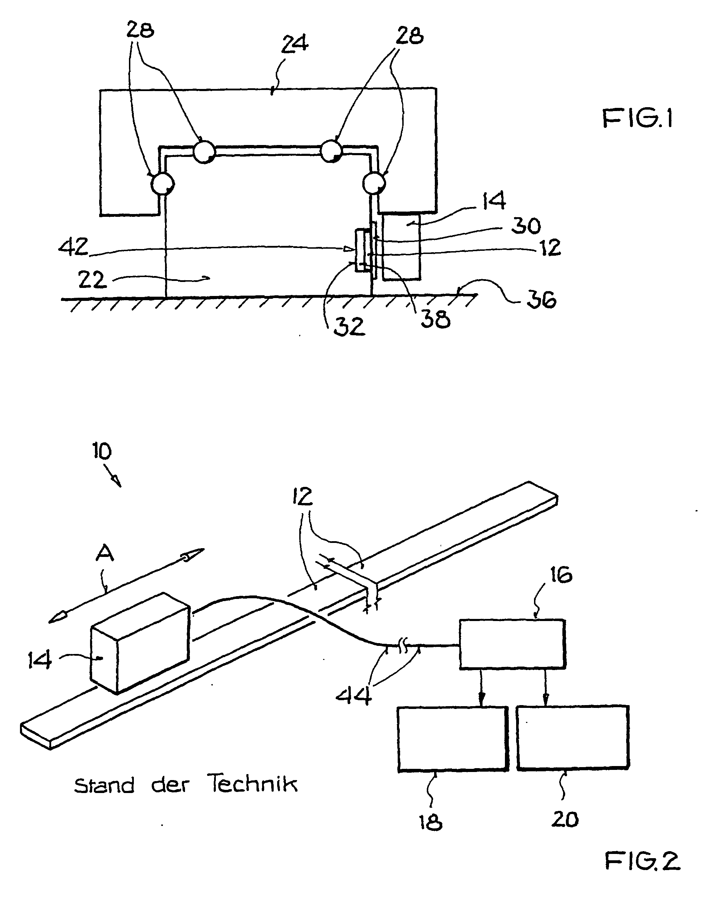

In Figur 2 ist schematisch eine Längenmessvorrichtung 10 dargestellt, die den prinzipiellen Aufbau zeigt. An einem nicht näher dargestellten Bauteil ist ein Maßkörper 12 befestigt, der bandförmig ausgebildet ist und im dargestellten Ausführungsbeispiel ein in Polymer gebundenes ferritisches Material aufweist. Durch systematische Magnetisierung mit abwechselnden Süd- und Nordpolen wird ein magnetisches Wechselfeld über dem Maßkörper erzeugt.

Gleichzeitig ist/sind ein Sensor/Sensoren 14 vorhanden, der/die den Maßkörper 12 in seiner Längsrichtung A fahrbar abtastet/abtasten. Der Sensor/die Sensoren wandelt/wandeln die am magnetischen Maßkörper 12 aufgrund der sich ändernden magnetischen Feldstärke vorhandenen Feldstärkenunterschiede in Signale um, die er/sie über ein Verbindungskabel 44 an eine elektronische Auswerteinheit 16 weitergibt/weitergeben. Die Auswerteinheit 16 erfasst die von dem Sensor/den Sensoren 14 eingehenden Signale und wertet diese aus. Die ausgewerteten Signale werden beispielsweise einer Anzeigeeinheit 18 oder einer Speicher- oder Weiterverarbeitungseinheit 20 zugeführt. Das Messsystem kann auch als induktives Messsystem ausgebildet sein.

Figur 1 zeigt eine praktische Umsetzung des Einsatzes der erfindungsgemäßen Längenmessvorrichtung im Rahmen eines Führungsprofils 22, das auf einer Basis 36 angeordnet ist. Über dem rechteckförmigen Führungsprofil 22 ist ein U-förmiger Schlitten 24 über Kugellager 28 längsverschieblich gelagert. Auf der rechten unteren Seitenwand des Führungsprofils 22 ist eine Nut 32 eingefräst, die mit einem außenseitig aufgebrachten, zum Beispiel aufgeschweißten, Deckband 30 einen geschlossenen Kanal 42 bildet.

Unmittelbar vor dem Kanal 42 ist/sind ein Sensor/Sensoren 14 an dem Schlitten 24 gelagert, der/die längsverschieblich mit dem Schlitten 24 einen innerhalb des Kanals 42 befindlichen Maßkörper 12 zur Detektierung der Längsposition abtastet/abtasten.

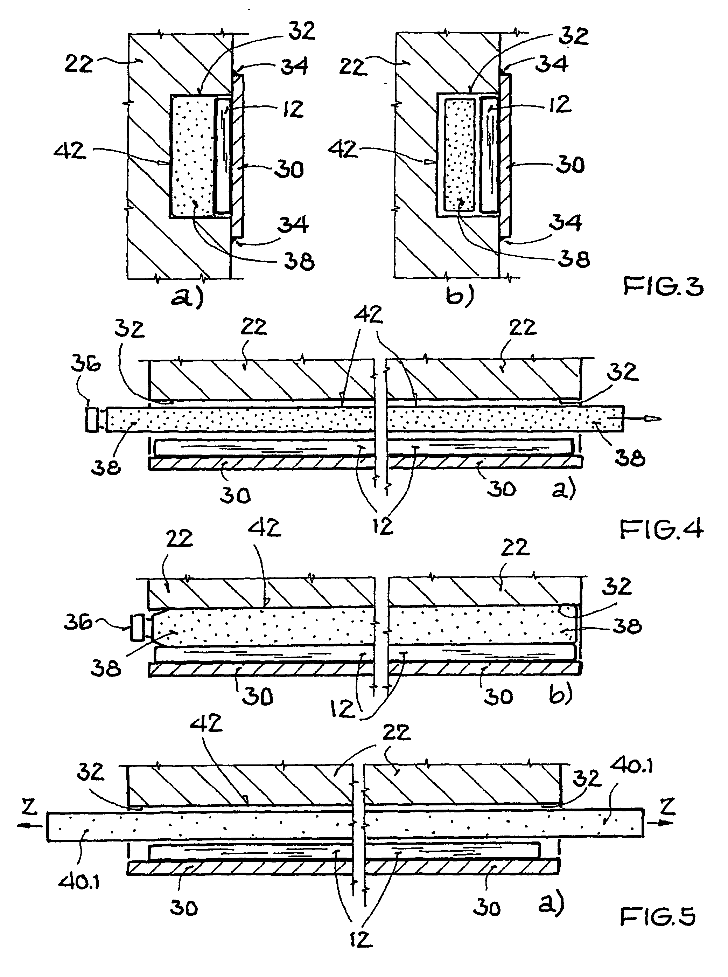

Ein erstes Ausführungsbeispiel ist in den Figuren 3 und 4 dargestellt.

Wie in Figur 1 ist das Deckblech 30 beispielsweise über Schweißnähte 34 an der vorderen Stirnseite des Bauteils angeschweißt, wodurch der Kanal 42 in Verbindung mit der Nut 32 gebildet wird.

Es kommt ein Porenbandkörper 38 zum Einsatz, der eine luftdichte Umhüllung und an seiner Stirnseite eine Ventileinheit 36 aufweist. Zunächst weist der Porenbandkörper 38 Querschnittskonturen auf, die erlauben, dass dieser in den Kanal 42 eingeschoben werden kann. Die Einschiebung erfolgt, nachdem der bandförmige Maßkörper 12 in den Kanal 42 eingeschoben ist. Diese Situation ist in Figur 4a dargestellt.

Nachdem der Porenbandkörper 38 in seiner Endposition in den Kanal 42 eingeschoben ist, wird die Ventileinheit 36 geöffnet, wodurch ein beliebiges flüssiges oder gasförmiges Medium einströmt, das zu einer Vergrößerung der Querschnittsabmessungen des Porenbandkörpers 38 führt, was zur Folge hat, dass der Maßkörper 12 an die Innenwandung des Deckbandes 30 fixierend angepresst wird und sich der Porenbandkörper 38 innerhalb des Kanals 42 elastisch verspannt. In dieser Position ist eine zuverlässige Fixierung des Maßkörpers 12 gewährleistet, wodurch die während des Betriebs erforderlichen Messungen der Position in Zusammenhang mit dem Sensor/den Sensoren zuverlässig bewerkstelligt werden können.

Tritt nun der Fall auf, dass der Maßkörper ausgetauscht werden muss, da zum Beispiel Defekte vorliegen, wird in einfacher Art und Weise über die Ventileinheit 36 das eingeströmte Medium wieder ausgeführt, wodurch es zu einer Verminderung der Querschnittsabmessungen des Porenbandkörpers kommt. In diesem Zustand ist der Maßkörper 12 in einer losen Position innerhalb des Kanals 42 vorhanden und kann problemlos über eine Stirnseite abgezogen werden. Daran anschließend kann ein neuer Maßkörper 12 zugeführt werden, der dadurch fixiert wird, dass dem Porenbandkörper 38 wiederum über die Ventileinheit 36 das Medium zugeführt wird, wodurch dieser Porenbandkörper 38 im Hinblick auf eine zuverlässige Lagefixierung den Maßkörper 12 gegen die Innenwandung des Deckbandes 30 presst. Als Medium kann beispielsweise Luft verwendet werden.

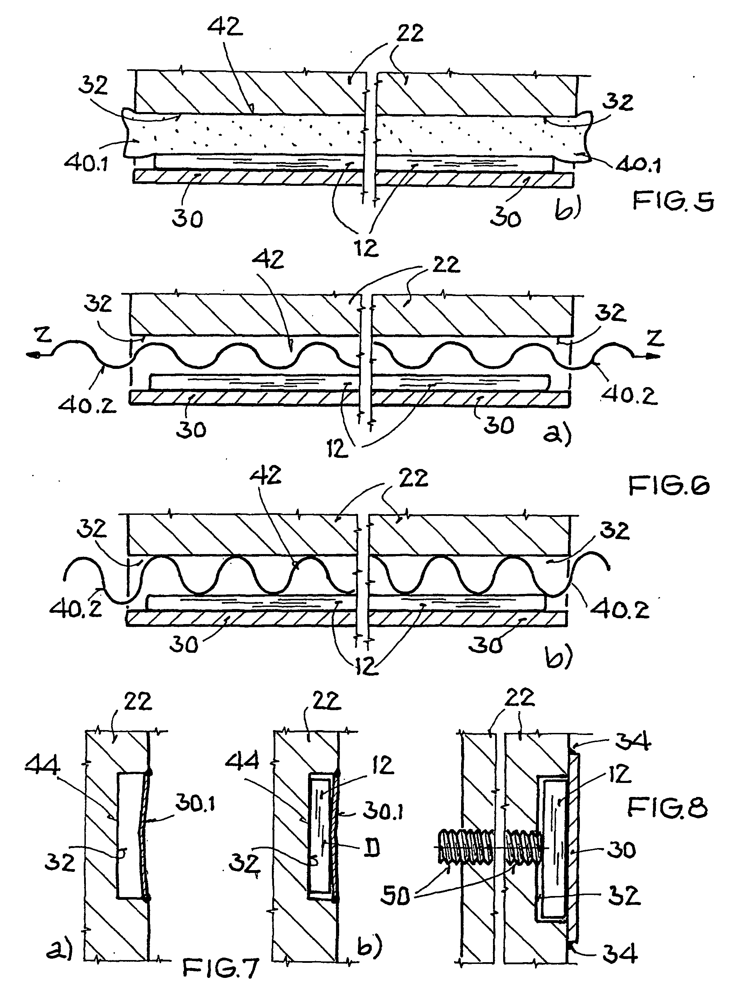

In einem weiteren Ausführungsbeispiel gemäß den Figuren 5a und b kommt als Fixierungsmittel für den Maßkörper 12 ein elastischer Bandkörper zum Einsatz, der als Gummiband 40.1 ausgebildet ist. Bei der Montage wird das Gummiband 40.1 unter Zug (Pfeil Z) gesetzt und in den Kanal 42 eingeführt. Sobald die Zugkraftwirkung entspannt wird, vergrößern sich die Querschnittsabmessungen des Gummibandes 40.1 und pressen dadurch den Maßkörper 12 auf die Innenseite des Deckbandes 30.

Soll der Maßkörper ausgetauscht werden, wird auf das Gummiband 40.1 eine Zugkraft angesetzt, die eine Verminderung der Querschnittsabmessungen des Bandes selbst bewirkt, wodurch der Maßkörper 12 in seiner Fixierung frei wird und stirnseitig aus dem Kanal 42 abgezogen werden kann. Danach wird ein neuer Maßkörper 12 in den Kanal 42 eingeführt und die Zugkraftbeanspruchung des Gummibandes aufgelöst, sodass der neu eingeführte Maßkörper 12 innerhalb des Kanals 42 zuverlässig dauerhaft fixiert ist.

Eine weitere Ausgestaltung ist in den Figuren 6a und b dargestellt, wobei das Gummiband 40.1 durch ein Wellenband 40.2 ersetzt ist, das ebenfalls unter Zugbeanspruchung Z seine Querschnittsabmessungen vermindert, wodurch ein Einführen beziehungsweise Abziehen des Maßkörpers 12 gewährleistet wird. Die zuverlässige Fixierung des Maßkörpers 12 innerhalb des Kanals 42 erfolgt nach Abbau der Zugkraft Z. Der Maßkörper 12 wird elastisch an die Innenseite des Deckbandes 30 gedrückt - jeweils punktweise in den Bereichen der Hochpunkte des Wellenbandes 40.2. Gleichzeitig verspannt sich das Wellenband 40.2 innerhalb des Kanals 42.

Eine von den vorgenannten Ausführungsbeispielen unabhängige Ausführungsvariante zeichnet sich dadurch aus, dass ein Deckband 30.1 eingesetzt wird, das von vornherein eine in Richtung der Nut 32 weisende konkave Wölbung aufweist. Das Deckband 30.1 weist ebenfalls elastische Eigenschaften auf, das heißt, dass ein Einziehen des Maßkörpers 12 möglich ist, wobei bei eingezogenem Maßkörper 12 das Deckband 30.1 eine elastisch wirkende Druckkraft D auf den Maßkörper bewirkt, sodass dieser in dem eingeführten Zustand klemmend lösbar fixiert ist.

Mit der dargestellten Längenmessvorrichtung werden wirtschaftliche Einsatzmöglichkeiten umgesetzt, die insbesondere darauf abzielen, dass ein Maßkörper infolge einer Störung problemlos ersetzt werden kann, ohne dass Führungsprofile, Maschinenbetteinheiten oder andere Bauteile in ihrer Gesamtheit ausgetauscht werden müssen. Erfindungsgemäß ist erkannt worden, dass durch den Einsatz von lösbaren Fixierungsmitteln innerhalb eines geschlossenen Kanals, in dem der Maßkörper angeordnet ist, ein problemloser und damit wirtschaftlicher Austausch möglich ist. Der Einsatz des erfindungsgemäßen Längenmesssystems ermöglicht somit einen Austausch beziehungsweise eine Reparatur des Längenmesssystems, ohne dass kostenintensive Führungsprofile, Maschinenbetteinrichtungen oder Bauteile ersetzt werden müssen.

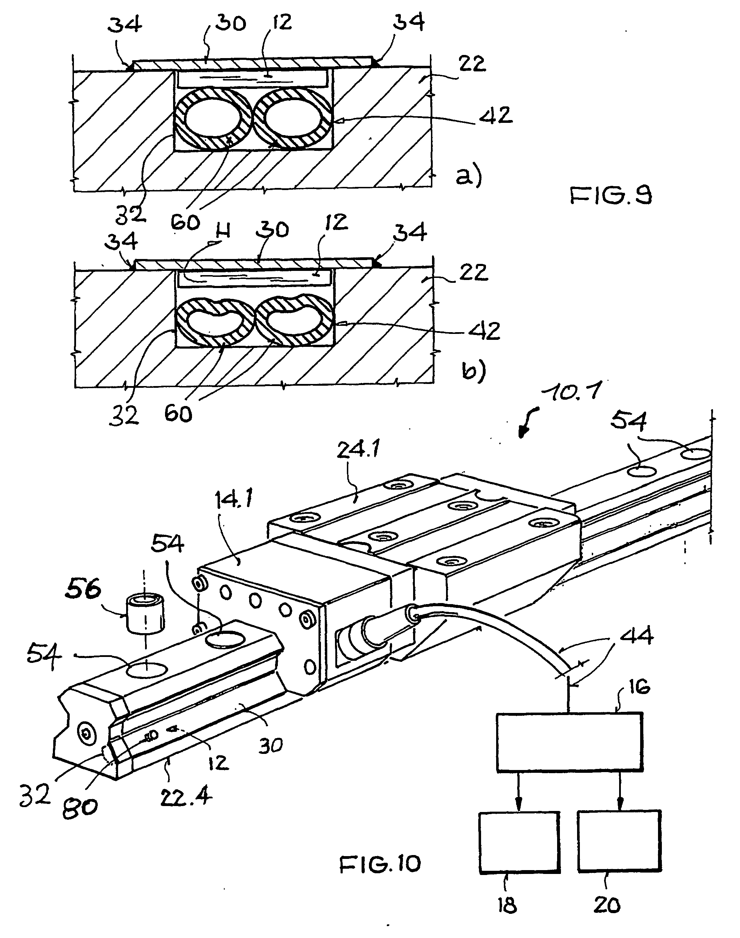

In Figur 8 ist eine Ausführungsvariante dargestellt, bei der der in den Kanal 12 eingebrachte Maßkörper durch rückseitig durch eine Ausnehmung 52 im Führungsprofil 22 vorhandene Schraubeinheit 50 fixiert wird. In Längsrichtung des Maßkörpers 12 gesehen sind hierbei mehrere Schrauben 50 in einem vorgegebenen Raster vorhanden. Neben Schrauben 50 können auch andere Fixierelemente eingesetzt werden, die die Möglichkeit aufweisen, am Führungsprofil lösbar fixiert zu werden und gleichzeitig den Maßkörper 12 gegen die Rückwandung des Deckbleches 30 zu drücken.

Eine in der Praxis besonders bewährte vorteilhafte Ausgestaltung einer erfindungsgemäßen Längenmessvorrichtung ist in den Figuren 9a und b dargestellt. Der Kanal 42 wird wie bei dem Ausführungsbeispiel gemäß den Figuren 3a und b durch eine in das Führungsprofil 22 eingefräste Nut 32 und ein außenseitig abschließendes Deckband 30 gebildet. Im Nutgrund sind zwei elastische Schläuche 60 angeordnet, die unter Umgebungsdruck stehen und aufgrund ihrer Elastizität den oberseitig angeordneten Maßkörper 12 gegen die Innenwandung des Deckbandes 30 drücken, wodurch der Maßkörper 12 in seiner Lage fixiert ist.

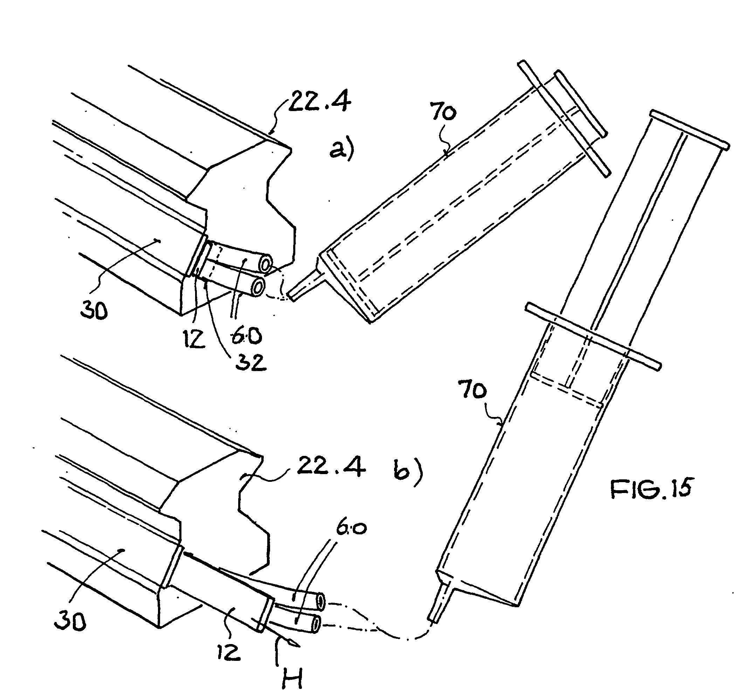

Der Austausch des Maßkörpers 12 ist in den Figuren 15a und 15b schematisch dargestellt. Die elastischen Schläuche 60 werden in ihrem einen Endbereich luftdicht verschlossen (nicht dargestellt) . Dann wird an dem anderen Endbereich jeweils eine Spritze 70 angesetzt. Der Innenraum der Schläuche 60 wird mittels der Spritze 70 zumindest teilweise evakuiert, wodurch sich der Innenraum zusammenzieht. Infolgedessen wird die elastische Klemmwirkung gegenüber dem Maßkörper 12 aufgehoben. Dieser Zustand ist auch in Figur 9b im Querschnitt dargestellt. In dem Zustand gemäß Figur 15b beziehungsweise 9b kann der Maßkörper 12 in einfacher Art und Weise aus dem Kanal 42 herausgezogen werden (Pfeil H) und ein neuer Maßkörper 12 kann daran anschließend wieder in den Kanal 42 eingeführt werden. Nach dem Einführen des neuen Maßkörpers 12 werden die Schläuche 60 wieder unter Umgebungsdruck gesetzt, wodurch sie sich aufweiten und den Maßkörper 12 elastisch klemmend an die Innenwandung des Deckbandes 30 pressen.

Um das Herausziehen beziehungsweise das Einführen des Maßkörpers zu erleichtern, kann innerhalb des Kanals 42 ein Gleitmittel vorhanden sein.

Es ist auch möglich, die Schläuche unter Überdruck zu setzen, wodurch sich eine klar definierte Anpresskraft auf den Maßkörper 12 einstellen lässt.

In Figur 10 ist eine weitere Ausführungsform einer Längenmessvorrichtung 10.1 dargestellt, das ein Führungsprofil 22.4 aufweist, das an seinen beiden Seitenlängsrändern U-förmige Ausnehmungen mit geneigten Flanken aufweist. In der rechten unteren Flanke ist die Nut 32 eingeformt, innerhalb derer die Fixiermittel und der Maßkörper 12 angeordnet sind. Die Nut 32 ist mittels des Deckbandes 30 verschlossen. Auf dem Führungsprofil 22.4 gleitet in Längsrichtung formschlüssig ein Führungsschlitten 24.1. An den Führungsschlitten 24.1 ist seitlich ein Sensor 14.1 angeschlossen, der die von dem Maßkörper 12 detektierten Signale über das Verbindungskabel 44 an die Auswerteinheit 16 weiterleitet.

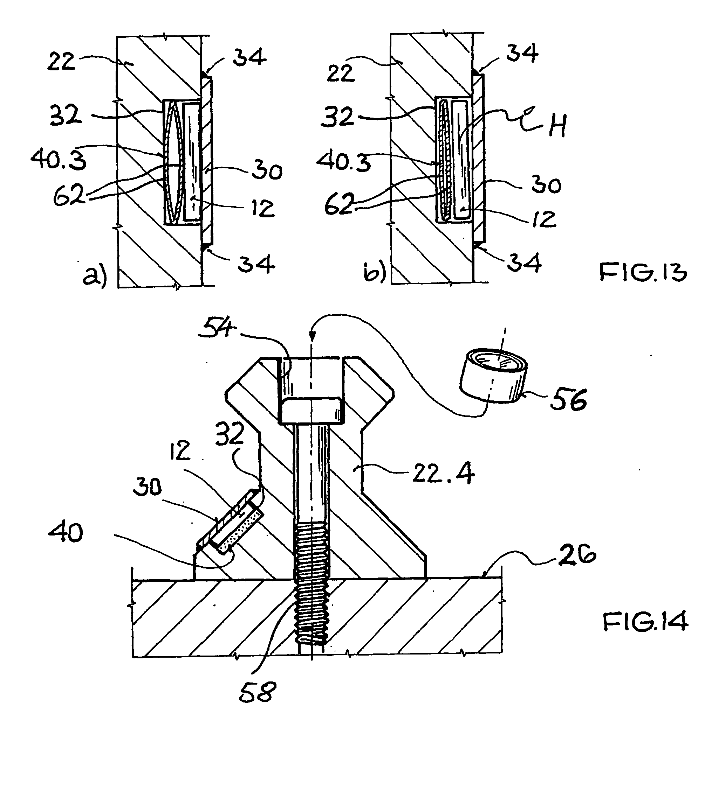

Das Führungsprofil 22.4 besitzt rasterartig in Längsrichtung beabstandet vorhandene durchgehende Ausnehmungen 54, die primär dazu dienen, das Führungsprofil 22.4 über eingeführte Befestigungsmittel 54 (siehe auch Figur 14) mit der Basis 36 zu verbinden. Oberseitig ist in die Ausnehmung 54 zusätzlich eine weitere Informationseinheit 56 eingesetzt, die bevorzugt als Magneteinheit ausgebildet ist. Die Informationseinheit 56 enthält Informationen über mögliche Referenzpunkte beziehungsweise Endlagen, die ebenfalls vom Sensor 14.1 erfasst werden.

Schließlich ist in Figur 10 noch schematisch dargestellt, dass der Maßkörper 12 innerhalb der Nut durch zusätzliche Fixiermittel 80 in seiner Position exakt gehalten wird. Im dargestellten Ausführungsbeispiel ist das zusätzliche Fixiermittel 80 als von außen über das Deckband in die Nut eingeschraubte Schraube ausgebildet. Die zusätzlichen Fixiermittel können in nicht näher dargestellten Ausführungsvarianten sowohl als kraftschlüssige oder formschlüssige Fixiermittel ausgebildet sein.

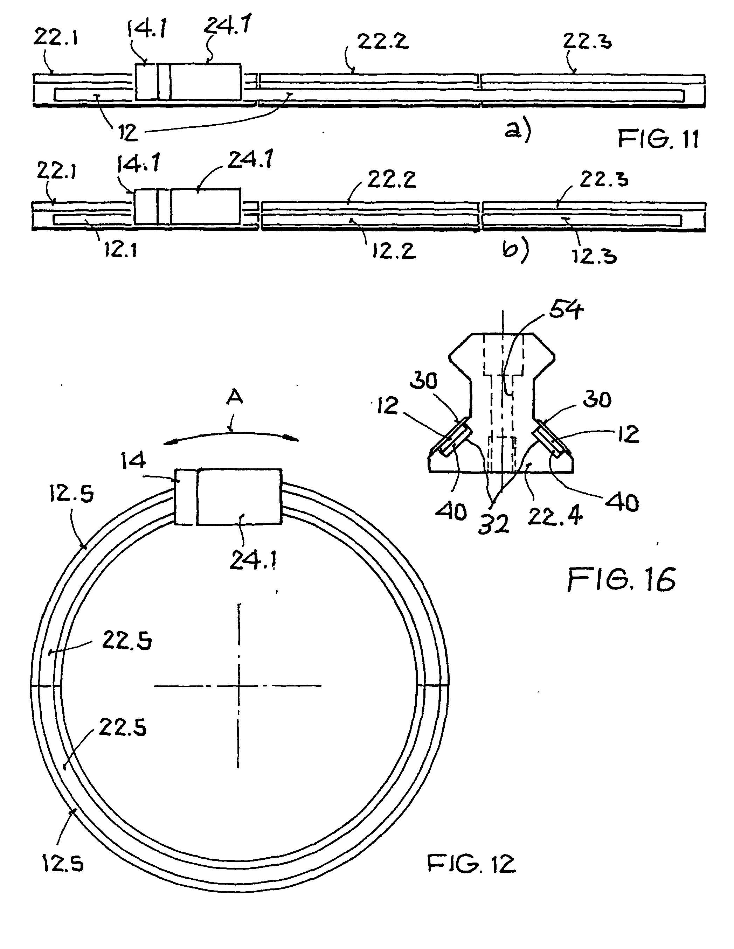

Figur 11a zeigt mehrere hintereinander angeordnete Führungsprofile 22.1, 22.2, 22.3, wobei ein durchgehender Maßkörper 12 eingesetzt wird. Die Ausführungsvariante gemäß Figur 11b unterscheidet sich von der gemäß Figur 11a dadurch, dass jedes Führungsprofil 22.1, 22.2, 22.3 einen eigenen Maßkörper 12.1, 12.2, 12.3 aufweist, das heißt kein durchgehender Maßkörper vorhanden ist.

In Figur 12 ist schematisch eine Draufsicht auf eine Längenmessvorrichtung dargestellt, bei der das Führungsprofil 22.5 in Längsrichtung kreisförmig ausgebildet ist, das heißt die Längenmessvorrichtung wird zu Rundmessungen eingesetzt.

Die Figuren 13a und b zeigen eine weitere Ausführungsvariante der Fixiermittel 40.3. Die Fixiermittel sind in diesem Ausführungsbeispiel als metallischer Hohlbandkörper ausgebildet, wobei der Hohlbandkörper durch zwei konvex nach außen gekrümmte elastische Blechwandeinheiten 62 gebildet wird, die an ihren Seitenlängsrändern miteinander verbunden, bevorzugt verschweißt sind.

Das Fixierungsprinzip beziehungsweise die Austauschmöglichkeit funktioniert ähnlich dem bereits zu den Figuren 15a, b beschriebenen Vorgang. Unter Umgebungsdruck ist der metallische Bandkörper 40.3 gemäß Figur 13a aufgeweitet, sodass er den Maßkörper 12 fixierend gegen die Innenwandung des Deckbleches 30 drückt. Zum Austausch des Maßkörpers 12 wird im Innern des Bandkörpers 40.3 ein Unterdruck erzeugt, sodass sich das Innenvolumen des Bandkörpers 40.3 - wie in Figur 13b dargestellt - verkleinert. In diesem Zustand kann der Maßkörper 12.3 herausgenommen werden (Pfeil H) und ein neuer Maßkörper 12 eingesetzt werden.

Bei dem in Figur 16 dargestellten Querschnitt eines Führungsprofils 22.6, das im Wesentlichen dieselbe Querschnittskontur wie das Führungsprofil 22.4 gemäß Figur 10 aufweist, ist auch auf der gegenüberliegenden unteren Flanke des Führungsprofils 22.6 eine weitere Nut 32 vorhanden, innerhalb derer der Maßkörper 12 und die Fixiermittel 40 angeordnet sind. Es ist weiterhin möglich, weitere Nute mit eingesetztem Maßkörper 12 und Fixiermittel 40 vorzusehen, was in Figur 16 nicht näher dargestellt ist.

## Patentansprüche

1. Längenmessvorrichtung (10) mit
- einem bandförmigen Maßkörper (12),
- einem Sensor/Sensoren (14), der/die entlang dem Maßkörper (12) bewegt wird/werden und dabei die auf dem Maßkörper (12) gespeicherten Informationen erfasst/ erfassen,
- einer Auswerteinheit (16), die die von dem Sensor/den Sensoren (14) erhaltenen Informationen auswertet und weiterbearbeitet, **gekennzeichnet durch** folgende Merkmale:
- der Maßkörper (12) ist in einem geschlossenen, lediglich an zumindest einer Stirnseite offenen oder öffenbaren Kanal (42) angeordnet und
- es sind Fixiermittel (38; 40.1, 40.2; 50; 60) innerhalb des Kanals (42) vorhanden, die den Maßkörper (12) innerhalb des Kanals (42) lösbar fixieren, derart, dass der Maßkörper (12) im Bedarfsfall **durch** Abziehen beziehungsweise Einführen von der Stirnseite des Kanals (42) ausgetauscht werden kann.

2. Längenmessvorrichtung nach Anspruch 1,
**dadurch gekennzeichnet, dass**
die Fixiermittel (38; 40.1, 40.2; 60) den Maßkörper (12) durch elastisch aufgebrachten Druck fixieren.

3. Längenmessvorrichtung nach Anspruch 1 oder 2,
**dadurch gekennzeichnet, dass**
die Fixiermittel (38; 40.1, 40.2; 50; 60) den Maßkörper (12) gegen den dem Sensor/den Sensoren (14) zugewandten Innenwandungsbereich des Kanals (42) drücken.

4. Längenmessvorrichtung nach einem oder mehreren der vorstehenden Ansprüche,
**dadurch gekennzeichnet, dass**
die Fixiermittel (38; 60; 40.3) als verschlossener Bandkörper oder als Bandkörper mit elastischem Hohlprofilquerschnitt ausgebildet sind, wobei die Querschnittsabmessungen des Bandkörpers durch Veränderung des Volumens innerhalb des Bandkörpers beziehungsweise des Hohlprofilquerschnitts infolge Zuführung beziehungsweise Abführung eines flüssigen oder gasförmigen Mediums veränderbar sind.

5. Längenmessvorrichtung nach einem oder mehreren der Ansprüche 1 bis 3,
**dadurch gekennzeichnet, dass**
die Fixiermittel (40.1, 40.2) als elastische Bandkörper ausgebildet sind, deren Querschnittsabmessungen durch Veränderungen auf den elastischen Bandkörper einwirkenden Zugkraft verändert werden können.

6. Längenmessvorrichtung nach Anspruch 5,
**dadurch gekennzeichnet, dass**
der elastische Bandkörper als Gummiband (40.1) ausgebildet ist.

7. Längenmessvorrichtung nach Anspruch 5,
**dadurch gekennzeichnet, dass**
der elastische Bandkörper als Wellenband (40.2) ausgebildet ist.

8. Längenmessvorrichtung nach einem oder mehreren der vorstehenden Ansprüche,
**dadurch gekennzeichnet, dass**
der geschlossene Kanal (42) durch eine in einem Bauteil vorhandene Nut (32) und ein die Nut (32) abdeckendes Deckband (30) ausgebildet ist.

9. Längenmessvorrichtung nach Anspruch 8,
**dadurch gekennzeichnet, dass**
das Deckband (30) angeschweißt, angelötet oder angeklebt ist, wobei das Deckband (30) insbesondere als Deckblech ausgebildet sein kann.

10. Längenmessvorrichtung nach Anspruch 1, 8 oder 9,
**gekennzeichnet durch** folgende Merkmale:
- die dem Arbeitsbereich, das heißt dem Sensor/den Sensoren (14) zugeordnete Wandung des Kanals (42) ist als elastisch konkav in den Kanal nach innen gewölbt gerichtete Wandung ausgebildet und der Maßkörper (12) drückt im in den Kanal eingeführten Zustand den konvexen Wandungsbereich nach außen und wird **dadurch** elastisch klemmend gehalten.

11. Längenmessvorrichtung nach einem oder mehreren der vorstehenden Ansprüche,
**dadurch gekennzeichnet, dass**
der Maßkörper (12) als flexibles Maßkörperband ausgebildet ist.

12. Längenmessvorrichtung nach einem oder mehreren der Ansprüche 1 bis 10,
**dadurch gekennzeichnet, dass**
der Maßkörper als starrer Maßkörper ausgebildet ist.

13. Längenmessvorrichtung nach einem oder mehreren der vorstehenden Ansprüche,
**dadurch gekennzeichnet, dass**
die Längenmessvorrichtung als magnetische Messvorrichtung ausgebildet ist, das heißt der Sensor/die Sensoren (14) erfasst/erfassen die auf dem bandförmigen Maßkörper (12) vorhandenen unterschiedlichen magnetischen Feldstärken und gibt/geben seine/ihre Signale an die Auswerteinheit (16) ab.

14. Längenmessvorrichtung nach einem oder mehreren der vorstehenden Ansprüche,
**dadurch gekennzeichnet, dass**
der geschlossene Kanal (42) mit Maßkörper (12), Sensor/Sensoren (14) und Fixiermittel (38; 40.1, 40.2) an/in einem Führungsprofil (22) angeordnet ist oder an/in einem Maschinenbett angeordnet ist oder an/in speziell für den Maßkörper gefertigten Bauteilen angeordnet ist.

15. Längenmessvorrichtung nach Anspruch 4,
**dadurch gekennzeichnet, dass**
der Bandkörper als zumindest teilweise evakuierbarer oder vergrößerbarer Porenbandkörper ausgebildet ist.

16. Längenmessvorrichtung nach einem oder mehreren der vorstehenden Ansprüche,
**dadurch gekennzeichnet, dass**
die Längenmessvorrichtung als induktive Messvorrichtung ausgebildet ist, das heißt der Sensor/die Sensoren (14) erfasst/erfassen die auf dem bandförmigen Maßkörper (12) vorhandenen unterschiedlichen magnetischen Permeabilitäten und gibt/geben seine/ihre Signale an die Auswerteinheit (16) ab.

17. Längenmessvorrichtung nach Anspruch 1, 3, 8, 9, 11 bis 16,
**dadurch gekennzeichnet, dass**
die Fixiermittel (50) als Einzelelemente ausgebildet sind, die von der Rückseite des Kanals (42) durch eine in einer Ausnehmung des den Kanal (42) umgebenden Bauteils eingebracht und fixiert sind.

18. Längenmessvorrichtung nach Anspruch 17,
**dadurch gekennzeichnet, dass**
die Fixiermittel (50) als Schrauben ausgebildet sind.

19. Längenmessvorrichtung nach Anspruch 17 oder 18,
**dadurch gekennzeichnet, dass**
die Fixiermittel (50) in einem vorgegebenen Rastermaß entlang der Längsachse des Maßkörpers (12) vorhanden sind.

20. Längenmessvorrichtung nach dem Oberbegriff von Anspruch 1, **gekennzeichnet durch**
folgende Merkmale:
- der Maßkörper (12) ist in einem geschlossenen, lediglich an zumindest einer Stirnseite offenen oder öffenbaren Kanal (42) angeordnet und
- der Maßkörper (12) ist vorgespannt innerhalb des Kanals (42) vorhanden.

21. Längenmessvorrichtung nach einem oder mehreren der Ansprüche 1 bis 4, 8, 9, 11 bis 14, 16,
**dadurch gekennzeichnet, dass**
die Fixiermittel (60) als zumindest ein elastischer Schlauch, insbesondere als zumindest zwei elastisch ausgebildete Schläuche, ausgebildet ist/sind.

22. Längenmessvorrichtung nach einem oder mehreren der Ansprüche 1 bis 4, 8, 9, 11 bis 14, 16,
**dadurch gekennzeichnet, dass**
die Fixiermittel (40.3) als metallischer Bandkörper ausgebildet sind, insbesondere mit zwei konvex gekrümmten an ihren Seitenlängsrändern verbundenen elastisch nachgiebigen Wandeinheiten (62).

23. Längenmessvorrichtung nach Anspruch 21 oder 22,
**dadurch gekennzeichnet, dass**
der Innenhohlraum der Fixiermittel (60, 40.3) zumindest teilweise evakuierbar ausgebildet ist.

24. Längenmessvorrichtung nach Anspruch 21 oder 22,
**dadurch gekennzeichnet, dass**
der Innenhohlraum der Fixiermittel (60, 40.3) unter Überdruck oder Umgebungsdruck setzbar ist.

25. Längenmessvorrichtung nach einem oder mehreren der vorstehenden Ansprüche,
**dadurch gekennzeichnet, dass**
die Fixiermittel eine Ventileinheit (36) aufweisen.

26. Längenmessvorrichtung nach einem oder mehreren der vorstehenden Ansprüche,
**dadurch gekennzeichnet, dass**
mehrere hintereinander angeordnete Führungsprofile (22.1, 22.2, 22.3) vorhanden sind und ein durchgehender Maßkörper (12) oder jeweils ein Maßkörper (12.1, 12.2, 12.3) pro Führungsprofil (22.1, 22.2, 22.3) vorhanden ist.

27. Längenmessvorrichtung nach Anspruch 14,
**dadurch gekennzeichnet, dass**
am/im Führungsprofil oder am/im Maschinenbett oder an/in speziell gefertigten Bauteilen mehrere Kanäle (42) beziehungsweise Nute mit Maßkörper (12) und Fixiermitteln vorhanden sind.

28. Längenmessvorrichtung nach einem oder mehreren der vorstehenden Ansprüche,
**dadurch gekennzeichnet, dass**
innerhalb des Kanals (42) beziehungsweise der Nut ein Gleitmittel vorhanden ist.

29. Längenmessvorrichtung nach Anspruch 14,
**dadurch gekennzeichnet, dass**
das Führungsprofil (22.5) in Längsrichtung kreisförmig verläuft.

30. Längenmessvorrichtung nach einem oder mehreren der vorstehenden Ansprüche,
**dadurch gekennzeichnet, dass**
zusätzliche Fixiermittel (80) vorhanden sind, die den Maßkörper (12) im Kanal (42) beziehungsweise in der Nut (32) kraft- oder formschlüssig fixieren.

31. Längenmessvorrichtung nach Anspruch 14 oder 29,
wobei das Führungsprofil (22.4) durchgehende Ausnehmungen (54) für Befestigungsmittel (58) zum Anschließen des Führungsprofils (22.4) an die Basis (26) aufweist,
**dadurch gekennzeichnet, dass**
in zumindest einer Ausnehmung (54) eine weitere Informationseinheit (56) angeordnet ist, die von einem Sensor auswertbare Informationen für Referenzpunkte oder Endlagen besitzt.

32. Längenmessvorrichtung nach Anspruch 31,
**dadurch gekennzeichnet, dass**
die Informationseinheit (56) als Magneteinheit ausgebildet ist.

## Claims

1. Length measurement device (10) with
- a band-type measuring element (12),
- a sensor/sensors (14), which is/are moved along the measuring element (12) and thereby detects/detect information stored on the measuring element (12),
- an evaluation unit (16), which evaluates and further processes the information obtained by the sensor/sensors (14),
**characterised by** the following features:
- the measuring element (12) is arranged in a closed channel (42), which is only open or openable at least on one face side, and
- fastening elements (38; 40.1, 40.2; 50; 60) are provided inside the channel (42), which detachably fasten the measuring element (12) inside the channel (42) in such a way that the measuring element (12) can be replaced, where necessary, by removal or insertion from the face side of the channel (42).

2. Length measurement device according to Claim 1, **characterised in that** the fastening elements (38; 40.1, 40.2; 60) fasten the measuring element (12) by elastically applied pressure.

3. Length measurement device according to Claim 1 or 2, **characterised in that** the fastening elements (38; 40.1, 40.2; 50; 60) press the measuring element (12) against the inside wall region of the channel (42) facing the sensor/sensors (14).

4. Length measurement device according to one or more of the preceding claims, **characterised in that** the fastening elements (38; 60; 40.3) are configured as sealed band elements or as band elements with elastic hollow cross-section, wherein the cross-sectional dimensions of the band element are variable by varying the volume inside the band element or the hollow cross-section by the supply and removal of a liquid or gaseous medium.

5. Length measurement device according to one or several of Claims 1 to 3, **characterised in that** the fastening elements (40.1, 40.2) are configured as elastic band elements, the cross-sectional dimensions of which can be varied by varying the tensile force acting on the elastic band element.

6. Length measurement device according to Claim 5, **characterised in that** the elastic band element is configured as a rubber band (40.1).

7. Length measurement device according to Claim 5, **characterised in that** the elastic band element is configured as a corrugated band (40.2).

8. Length measurement device according to one or more of the preceding claims, **characterised in that** the closed channel (42) is formed by a groove (32) provided in a structural part and a covering band (30) covering the groove (32).

9. Length measurement device according to Claim 8, **characterised in that** the covering band (30) is welded, soldered or glued on, wherein the covering band (30) can be configured in particular as a covering plate.

10. Length measurement device according to Claim 1, 8 or 9, **characterised by** the following features:
- the wall of the channel (42) allocated to the working area, i.e. the sensor/sensors (14), is configured as a concave wall, which is elastically arched inwards into the channel, and the measuring clement (12) presses the convex wall region outwards when inserted into the channel and is elastically clamped in place as a result.

11. Length measurement device according to one or more of the preceding claims, **characterised in that** the measuring element (12) is configured as a flexible measuring band.

12. Length measurement device according to one or more of Claims to 10, **characterised in that** the measuring element is configured as a rigid measuring element.

13. Length measurement device according to one or more of the preceding claims, **characterised in that** the length measurement device is configured as a magnetic measurement device, i.e. the sensor/sensors (14) detects/detect the different magnetic field intensities present on the band-type measuring element (12) and emits/emit its/their signals to the evaluation unit (16).

14. Length measurement device according to one or more of the preceding claims, **characterised in that** the closed channel (42) with measuring element (12), sensor/sensors (14) and fastening elements (38; 40.1, 40.2) is arranged on/in a guide profile (22) or on/in a machine bed or on/in structural parts specially produced for the measuring element.

15. Length measurement device according to Claim 4, **characterised in that** the band element is configured as a porous band element, which can be at least partially evacuated or increased in size.

16. Length measurement device according to one or more of the preceding claims, **characterised in that** the length measurement device is configured as an inductive measurement device, i.e. the sensor/sensors (14) detects/detect the different magnetic permeabilities present on the band-type measuring element (12) and emits/emit its/their signals to the evaluation unit (16).

17. Length measurement device according to Claims 1, 3, 8, 9, 11 to 16, **characterised in that** the fastening elements (50) are configured as single elements, which are inserted from the rear side of the channel (42) through a recess of the structural part surrounding the channel (42) and fastened in place.

18. Length measurement device according to Claim 17, **characterised in that** the fastening elements (50) are configured as screws.

19. Length measurement device according to Claim 17 or 18, **characterised in that** the fastening elements (50) are provided in a given modular dimension along the longitudinal axis of the measuring element (12).

20. Length measurement device according to the preamble of Claim 1, **characterised by** the following features:
- the measuring element (12) is arranged in a closed channel (42), which is only open or openable at least on one face side, and
- the measuring element (12) is provided in prestressed state inside the channel (42).

21. Length measurement device according to one or more of Claims 1 to 4, 8, 9, 11 to 14, 16, **characterised in that** the fastening elements (60) are configured as at least one elastic tube, in particular as at least two elastically configured tubes.

22. Length measurement device according to one or more of Claims 1 to 4, 8, 9, 11 to 14, 16, **characterised in that** the fastening elements (40.3) are configured as metal band elements, in particular with two convexly curved elastically flexible wall units (62) connected at their longitudinal side edges.

23. Length measurement device according to Claim 21 or 22, **characterised in that** the inside cavity of the fastening elements (60, 40.3) can be at least partially evacuated.

24. Length measurement device according to Claim 21 or 22, **characterised in that** the inside cavity of the fastening elements (60, 40.3) may be placed under excess pressure or ambient pressure.

25. Length measurement device according to one or more of the preceding claims, **characterised in that** the fastening elements have a valve unit (36).

26. Length measurement device according to one or more of the preceding claims, **characterised in that** several guide profiles (22.1, 22.2, 22..3) arranged one behind the other are provided and a continuous measuring element (12) or one measuring element (12.1, 12.2, 12.3) is respectively provided for each guide profile (22.1, 22.2, 22.3).

27. Length measurement device according to Claim 14, **characterised in that** several channels (42) or grooves with measuring elements (12) and fastening elements are provided on/in the guide profile or on/in the machine bed or on/in specially produced structural parts.

28. Length measurement device according to one or more of the preceding claims, **characterised in that** a slide element is provided inside the channel (42) or the groove.

29. Length measurement device according to Claim 14, **characterised in that** the guide profile (22.5) runs in a circular shape in the longitudinal direction.

30. Length measurement device according to one or more of the preceding claims, **characterised in that** additional fastening elements (80) are provided, which fasten the measuring element (12) in the channel (42) or in the groove (32) in a positive or non-positive manner.

31. Length measurement device according to Claim 14 or 29, wherein the guide profile (22.4) has continuous recesses (54) for fastening means (58) for connecting the guide profile (22.4) onto the base (26), **characterised in that** in at least one recess (54) a further information unit (56) is arranged, which possesses information for reference points or end positions that may be evaluated by a sensor.

32. Length measurement device according to Claim 31, **characterised in that** the information unit (56) is configured as a magnetic unit.

## Revendications

1. Dispositif de mesure de longueur (10) comportant
• un corps de mesure (12) en forme de bande
• un/des capteur(s) (14) qui est/sont déplacé(s) le long du corps de mesure (12) et palpe(nt) les information mémorisées sur le corps de mesure (12)
• une unité de traitement (16) qui exploite et traite les informations lues par le/les capteur(s) (14),
**caractérisé par** les caractéristiques suivantes :
• le corps de mesure (12) est disposé dans un canal (42) fermé, ouvert ou pouvant être ouvert seulement au niveau d'au moins une face frontale,
• des moyens de fixation (38 ; 40.1, 40.2 ; 50 ; 60) prévus à l'intérieur du
• canal (42), fixent de manière démontable le corps de mesure (12) à l'intérieur dudit canal (42), d'une manière telle que le corps de mesure (12), en cas de besoin, puisse être remplacé par extraction ou par insertion à partir de la face frontale du canal (42).

2. Dispositif de mesure de longueur selon la revendication 1, **caractérisé par le fait que** les moyens de fixation (38 ; 40.1, 40.2 ; 50 ; 60) fixent le corps de mesure (12) par une pression appliquée de manière élastique.

3. Dispositif de mesure de longueur selon la revendication 1 ou 2, **caractérisé par le fait que** les moyens de fixation (38 ; 40.1, 40.2 ; 50 ; 60) pressent le corps de mesure (12) contre la partie de paroi interne du canal (42) tournée vers le/les capteur(s) 14).

4. Dispositif de mesure de longueur selon une ou plusieurs des revendications précédentes, **caractérisé par le fait que** les moyens de fixation (38 ; 40.3, 60) sont conformés en corps fermé en forme de bande ou en corps en forme de bande à profil creux élastique en section transversale, les dimensions en section transversale du corps en forme de bande pouvant être modifiées par modification du volume à l'intérieur du corps en forme de bande ou de la section à profil creux obtenue par introduction voire évacuation d'un milieu liquide ou gazeux.

5. Dispositif de mesure de longueur selon une ou plusieurs des revendications 1 à 3, **caractérisé par le fait que** les moyens de fixation (40.1, 40.2) sont conformés en corps élastique en forme de bande, dont les dimensions en section transversale peuvent être modifiées par modification de la force de traction appliquée sur le corps élastique en forme de bande.

6. Dispositif de mesure de longueur selon la revendication 5, **caractérisé par le fait que** le corps élastique en forme de bande est conformé en bande de caoutchouc (40.1).

7. Dispositif de mesure de longueur selon la revendication 5, **caractérisé par le fait que** le corps élastique en forme de bande est conformé en bande ondulée (40.2).

8. Dispositif de mesure de longueur selon une ou plusieurs des revendications précédentes, **caractérisé par le fait que** le canal (42) fermé est formé d'une rainure (32) aménagée dans un composant et d'une bande de couverture (30) qui couvre la rainure (32).

9. Dispositif de mesure de longueur selon la revendication 8, **caractérisé par le fait que** la bande de couverture (30) est soudée, brasée ou collée, la bande de couverture (30), en particulier, étant conformée en tôle de fermeture.

10. Dispositif de mesure de longueur selon la revendication 1, 8 ou 9, **caractérisé par** les caractéristiques suivantes :
• la paroi du canal (42) associée à la zone de travail, c'est-à-dire au(x) capteur(s) (14) est conformée en paroi élastique concave cintrée dans le canal, dirigée vers l'intérieur, et le corps de mesure (12), à l'état inséré dans le canal, presse la zone de paroi convexe en direction de l'extérieur et est ainsi tenu par blocage élastique.

11. Dispositif de mesure de longueur selon une ou plusieurs des revendications précédentes, **caractérisé par le fait que** le corps de mesure (12) est conformé en bande flexible.

12. Dispositif de mesure de longueur selon une ou plusieurs des revendications 1 à 10, **caractérisé par le fait que** le corps de mesure et conformé en corps de mesure rigide.

13. Dispositif de mesure de longueur selon une ou plusieurs des revendications précédentes, **caractérisé par le fait que** le dispositif de mesure est conformé en dispositif de mesure magnétique , c'est-à-dire que le/les capteur(s) palpent les différentes intensités de champ magnétique présentes sur le corps de mesure en forme de bande (12) et délivre(nt) ses/leurs signaux à l'unité de traitement (16).

14. Dispositif de mesure de longueur selon une ou plusieurs des revendications précédentes, **caractérisé par le fait que** le canal (42) fermé avec le corps de mesure (12), le/les capteur(s) (14) et les moyens de fixation (38 ; 40.1, 40.2) est disposé sur/dans un profilé de guidage ou sur/dans un bâti de machine ou sur/dans des composants fabriqués spécifiquement pour le corps de mesure.

15. Dispositif de mesure de longueur selon la revendication 4, **caractérisé par le fait que** le corps de mesure est conformé en corps poreux en forme de bande, contractable ou expansible.

16. Dispositif de mesure de longueur selon une ou plusieurs des revendications précédentes, **caractérisé par le fait que** le dispositif de mesure de longueur est conformé en dispositif de mesure inductif, c'est-à-dire que le/les capteur(s) palpe(nt) les différentes perméabilités magnétiques présentes sur le corps de mesure (12) en forme de bande et délivre(nt) ses/leurs signaux à l'unité de traitement (16).

17. Dispositif de mesure de longueur selon revendications 1, 3, 8, 9, 11 à 16, **caractérisé par le fait que** les moyens de fixation (50) sont conformés en éléments individuels qui sont introduits depuis la face arrière du canal (42) à travers une échancrure du composant entourant le canal (42) et sont fixés.

18. Dispositif de mesure de longueur selon la revendication 17, **caractérisé par le fait que** les moyens de fixation (50) sont des vis.

19. Dispositif de mesure de longueur selon la revendication 17 ou 18, **caractérisé par le fait que** les moyens de fixation (50) sont disposés selon une grille prédéfinie le long de l'axe longitudinal du corps de mesure (12).

20. Dispositif de mesure de longueur selon le préambule de la revendication 1, **caractérisé par** les caractéristiques suivantes :
• le corps de mesure (12) est disposé dans un canal (42) fermé qui est ouvert ou peut être ouvert seulement au niveau d'au moins une face frontale,
• le corps de mesure (12) est monté précontraint à l'intérieur du canal (42).

21. Dispositif de mesure de longueur selon une ou plusieurs des revendications 1 à 4, 8, 9, 11 à 14, 16, **caractérisé par le fait que** les moyens de fixation (60) sont réalisés sous la forme d'au moins un tube souple élastique, en particulier d'au moins deux tubes souples élastiques.

22. Dispositif de mesure de longueur selon une ou plusieurs des revendications 1 à 4, 8, 9, 11 à 14, 16, **caractérisé par le fait que** les moyens de fixation (40.3) sont conformés en corps en forme de bande métallique, en particulier avec deux ensembles de paroi (62) élastiques à courbure convexe liées à leurs bords longitudinaux.

23. Dispositif de mesure de longueur selon la revendication 21 ou 22, **caractérisé par le fait que** la cavité intérieure des moyens de fixation (60, 40.3) est conformée de manière à pouvoir être au moins partiellement soumise à une pression négative.

24. Dispositif de mesure de longueur selon la revendication 21 ou 22, **caractérisé par le fait que** la cavité intérieure des moyens de fixation (60, 40.3) peut être soumise à une surpression ou à la pression ambiante.

25. Dispositif de mesure de longueur selon une ou plusieurs des revendications précédentes, **caractérisé par le fait que** les moyens de fixation comportent une unité de soupape (36).

26. Dispositif de mesure de longueur selon une ou plusieurs des revendications précédentes, **caractérisé par le fait qu'**il est prévu plusieurs profilés de guidage (22.1, 22.2, 22.3) disposés les uns à la suite des autres et un corps de mesure (12) continu, ou un corps de mesure par profilé de guidage (22.1, 22.2, 22.3).

27. Dispositif de mesure de longueur selon la revendication 14, **caractérisé par le fait que** plusieurs canaux (42) ou plusieurs rainures avec des corps de mesure (12) et des moyens de fixation sont prévus sur/dans le profilé de guidage ou sur/dans le bâti de machine ou sur/dans des composants fabriqués spécifiquement.

28. Dispositif de mesure de longueur selon une ou plusieurs des précédentes, **caractérisé par le fait qu'**un agent de glissement est prévu à l'intérieur du canal (42) ou de la rainure.

29. Dispositif de mesure de longueur selon la revendication 14, **caractérisé par le fait que** le profilé de guidage, dans la direction longitudinale, s'étend en forme de cercle.

30. Dispositif de mesure de longueur selon une ou plusieurs des revendications précédentes, **caractérisé par le fait qu'**il est prévu des moyens de fixation supplémentaires (80) qui assurent la fixation par serrage ou par obstacle du corps de mesure (12) dans le canal (42) ou dans la rainure (32).

31. Dispositif de mesure de longueur selon la revendication 14 ou 29, dans lequel le profilé de guidage (22.4) présente des évidements (54) traversants pour des moyens de fixation (58) pour relier le profilé de guidage (22.4) à la base (26), **caractérisé par le fait que** dans au moins un évidement (54) est logée une unité d'information (56) supplémentaire qui contient des, informations exploitables par un capteur pour des points de référence ou des positions extrêmes.

32. Dispositif de mesure de longueur selon la revendication 31, **caractérisé par le fait que** l'unité d'information (56) est conformée en unité magnétique.
